# EUROPEAN PATENT APPLICATION

(11) **EP 3 098 112 A1**
(43) Date of publication of application: **30.11.2016**
(21) Application number: 16397517.0
(22) Date of filing: 25.05.2016
(51) Int. Cl.: B60P 1/64, B60P 3/12, B60P 3/10

(54) **LOADING AND UNLOADING DEVICE FOR LOADING AND UNLOADING AN INTERCHANGEABLE PLATFORM FROM ITS TRANSPORT VEHICLE AND A TRANSPORT VECHICLE FOR THE INTERCHANGEABLE PLATFORM**

(30) Priority: 26.05.2015 FI 20155391
(71) Applicant: RANGERO OY, 38100 Sastamala (FI)
(72) Inventor: NARINEN, Seppo, 38100 SASTAMALA (FI); SIMONEN, Erno, 00520 HELSINKI (FI)
(74) Representative: Tampereen Patenttitoimisto Oy

(57) **Abstract**

The loading and unloading device (100), which is suitable for the loading and unloading of the interchangeable platform (200) from its transport vehicle (300). The device (100) includes an unloading reel (132), loading reel (123), tools (160, 121, 124) to use the loading reel (123) and tools (134) to produce torque for the unloading reel (132). The loading and unloading device (100) is arranged to be in the first and second mode. In the first mode, the power transmission between the loading reel (123) and the unloading reel (132) is turned on and in the second mode, the power transmission between the loading reel (123) and the unloading reel (132) is turned off. The device (100) is arranged by the effect of the first force to shift to the given first mode and to remain in the first mode, and is arranged to shift from the given first mode to the given second mode as another force is applied to the loading reel (123), whose effect overrides or exceeds the effect of the given first force.

## Description

### Target of the invention

The invention is directed to a loading and unloading device for loading of loads onto a transport vehicle. The invention is directed to a loading and unloading device, which is especially suitable for a transport vehicle of an interchangeable platform to load the platform onto its transport vehicle and unloading it from its transport vehicle.

### Background of the invention

Interchangeable platforms are typically used to transfer goods, accompanied by compatible loading equipment. An interchangeable platform refers to a load platform or a device, which can be pulled onto a transport vehicle or lowered on the ground by means of interchangeable platform loading equipment. Some transport vehicles have a tipping device. With the help of the tipping device, a part of the transport vehicle, such as a loading device or platform, can be set at a certain angle on the ground, thus facilitating the loading of the interchangeable platform. A loading device or platform can be positioned on a vehicle or a utility trailer. By means of the tipping device, the loading device or platform directs surface support force induced by gravity to the interchangeable platform and the load attached to it. This force is perpendicular relative to the interchangeable platform, i.e. it is directed partly in the unloading direction.

A cable winch is generally used for loading an interchangeable platform. An interchangeable platform winched onto a transport vehicle is more difficult to unload than load as directing the cable drive of the winch backwards is problematic in a loading device.

In several known solutions, the interchangeable platform is removed from the transport vehicle by tipping the loading device. As a result, the interchangeable platform partly exits the loading device or bed due to the effect of gravity until the rear edge of the interchangeable platform or the rollers behind it hit the ground. After this, the transport vehicle has to be removed from below the interchangeable platform to move the platform completely off the vehicle.

There are also cable-driven unloading solutions for interchangeable platforms, where the unloading cable is brought close to the rear part of the loading device to the front part of the interchangeable platform to force the platform to move backwards on a loading device.

In a well-known technology solution presented in patent specifications FI124491B, two separate cables are used for loading and unloading. This comes with an advantage that the loading cable can be pulled to a suitable distance from the transport vehicle and the load can be pulled onto the transport vehicle from this position with a winch.

If two separate cables are used for loading and unloading, it is difficult to synchronize the cable speeds and lengths of the loading and unloading cable because the cable speeds change in opposite directions as the cable rounds increase and decrease at cable reels during operation. Due to this, the loading and unloading cables may be subjected to mutual supertension or the cables may become slack.

The problem and danger in these solutions is that if the loading cable is not tight as the front part of the interchangeable platform passes the rear part of the loading device during unloading, the front part falls uncontrollably to the ground or flops down. In addition, if the unloading is performed downhill, the interchangeable platform may escape from the transport vehicle uncontrollably, if the loading cable holding the interchangeable platform has some slack or the loading reel does not have a brake. Even occasional slackening of the cable increases safety risks and the risk of a device malfunction.

### Short summary of the invention

One purpose of this invention is to reduce cost, safety and usability problems with regard to the loading and unloading of interchangeable platforms especially in light and medium-heavy vehicle classes, which include vans, cars, snowmobiles, small tractors and ATV vehicles, including their trailer solutions.

These purposes are achieved with a loading and unloading device described in patent claim 1. This device is the solution for the synchronization of the cable speeds of the loading and unloading cables of a given two-reel winch. This invention utilizes in a cost-effective manner the commonly available, well tried and advantageous technology. The solution presented in this invention is fault tolerant as the rotation of one of the cable reels can be adjusted under the control of a situation analysis during continuous loading and unloading to maintain the synchronism of the loading and unloading cables of the winch. These synchronization procedures do not originate from event history and are not based on assumptions of the prevailing situation and/or event history.

A technical solution may be a clearly mechanical one, which is also cost-efficient and service-friendly. Alternatively, it may be equipped with one winch motor to increase the efficiency. Damage sensitive technology does not exclude the fact that all loading devices can be used to load and unload interchangeable platforms.

More specifically, the characteristic feature of the loading and unloading device described in this invention is that presented in the independent patent claim 1. The advantageous modes of performance of the loading and unloading device are presented in the dependent claims 2-9.

### Description of drawings

- Figure 1: shows a transport vehicle 300 of an interchangeable platform 200 and the loading and unloading device 300 of an interchangeable platform as viewed diagonally from behind.
- Figure 2a: presents a loading and unloading device 100 in another mode as viewed from the side as a cross section.
- Figure 3: presents the gear wheel mesh forces caused by the cable forces of a loading and unloading device 100 in the first mode, as viewed from the side as a cross section

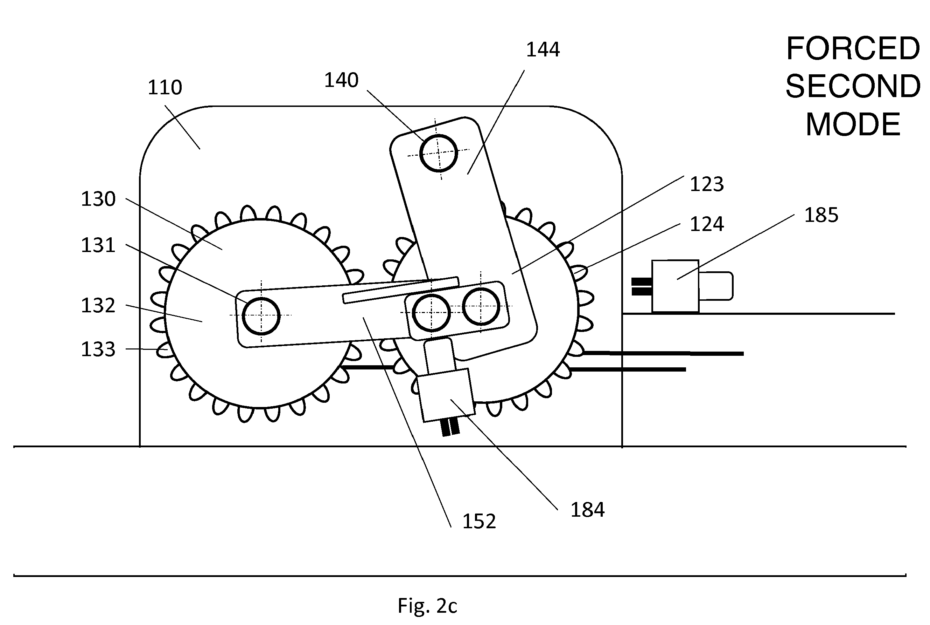

- Figure 2c: presents a loading and unloading device 100 as viewed from the side as a cross section while the power transmission release arm forces the gear coupling to shift to a another mode.

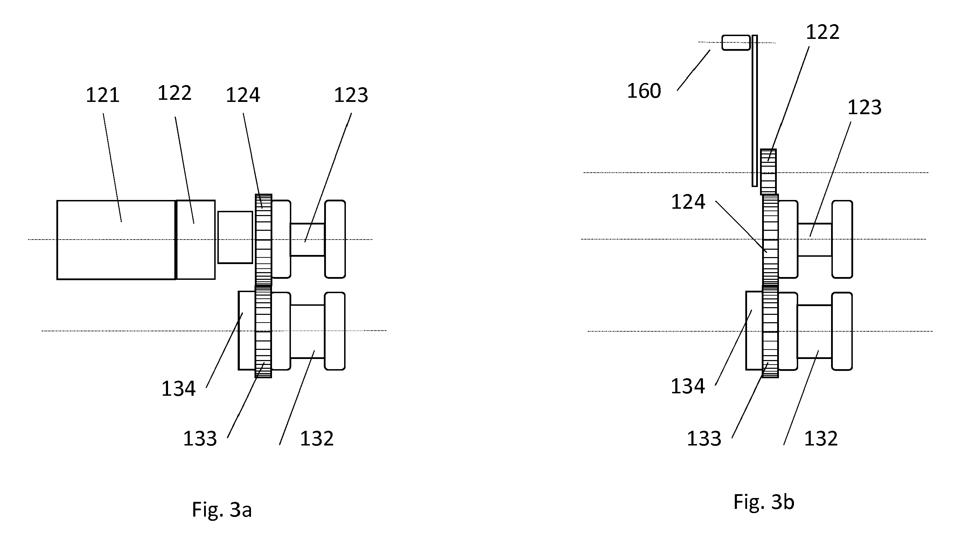

- Figure 3a: presents a loading and unloading device 100 driven by an electric motor, as viewed from the top.
- Figure 3b: presents a manually driven loading and unloading device 100, as viewed from the top.

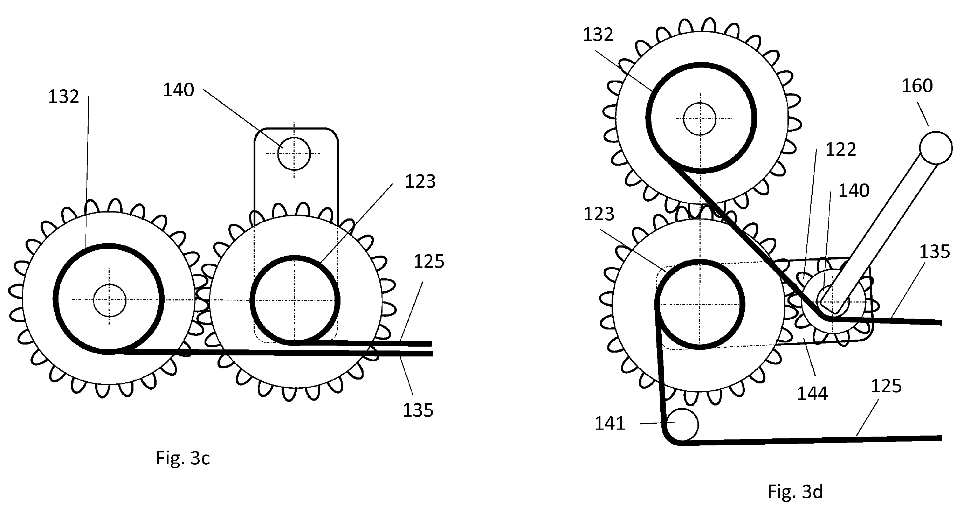

- Figure 3c: presents a loading and unloading device 100 driven by an electric motor, as viewed from the side as a cross section.
- Figure 3d: presents a manually driven loading and unloading device 100, as viewed from the side as a cross section.

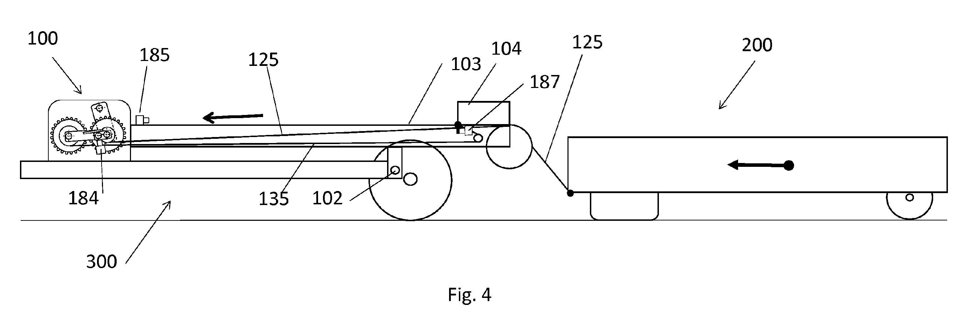

- Figure 4: presents a transport vehicle 300 of an interchangeable platform 200 at the start of the loading procedure, as viewed from the side.

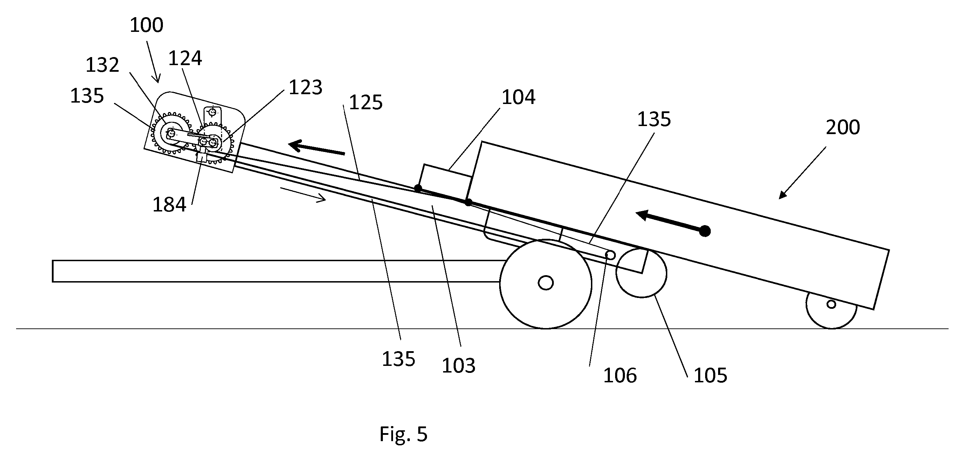

- Figure 5: presents a transport vehicle 300 of an interchangeable platform 200 during loading, as viewed from the side.

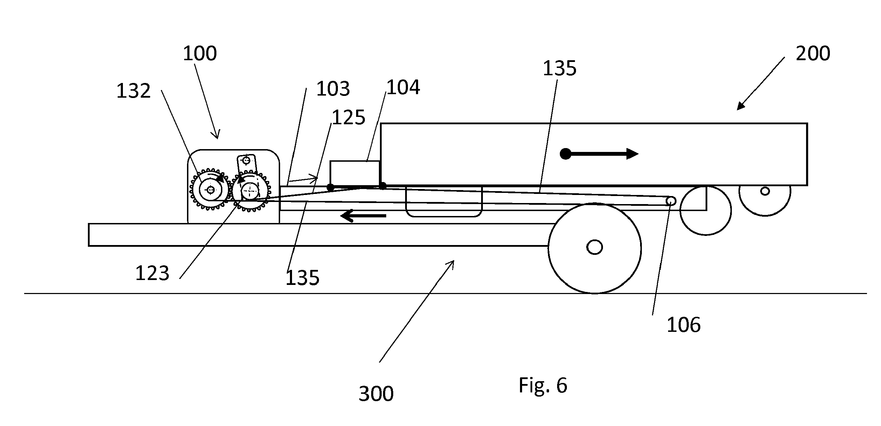

- Figure 6: presents a transport vehicle 300 of an interchangeable platform 200, as viewed from the side, at the start of the unloading of the interchangeable platform.

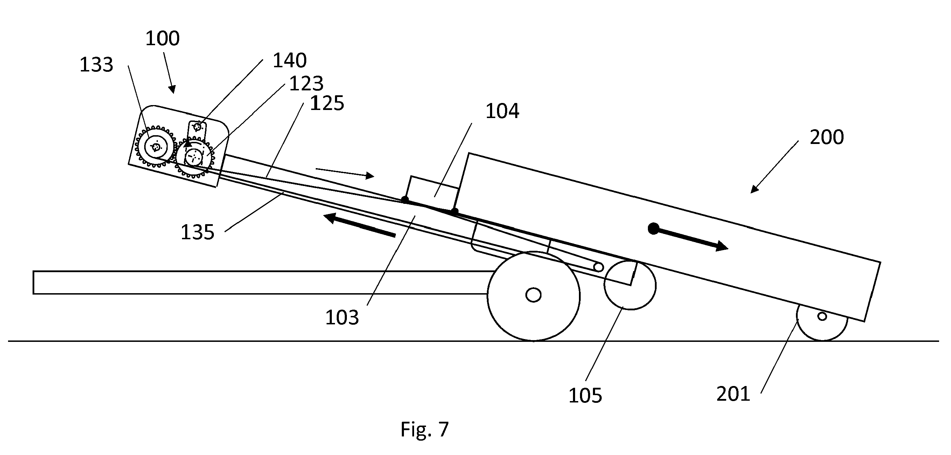

- Figure 7: presents a transport vehicle 300 of an interchangeable platform 200 during unloading, as viewed from the side.

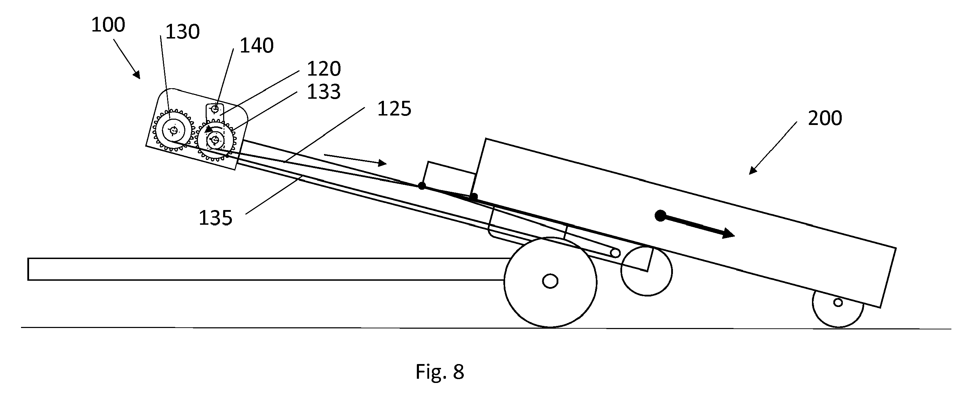

- Figure 8: presents a transport vehicle 300 of an interchangeable platform 200 during the unloading of the interchangeable platform, as viewed from the side, while synchronizing the cable lengths.

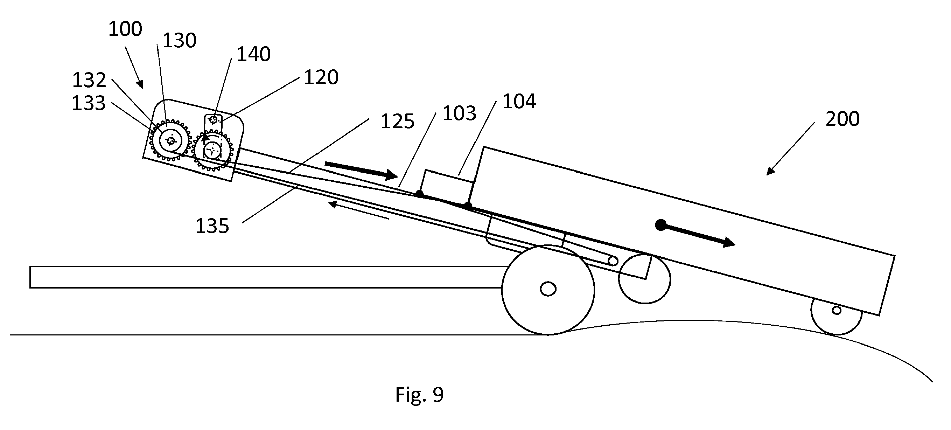

- Figure 9: presents a transport vehicle 300 of an interchangeable platform 200, as viewed from the side, while unloading the interchangeable platform downhill.

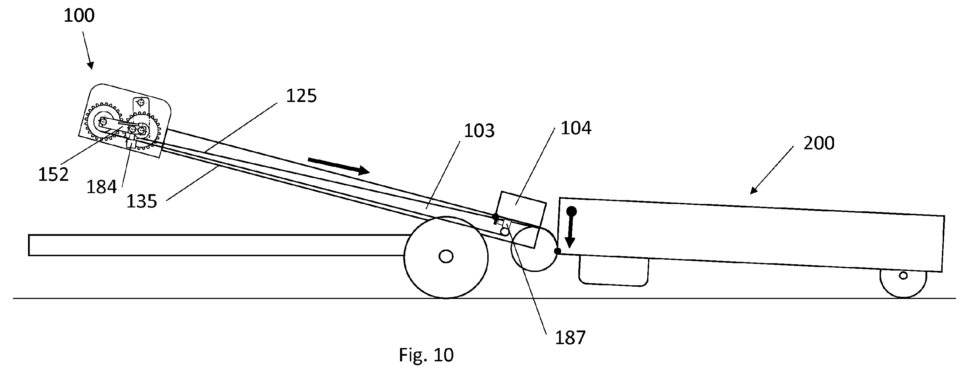

- Figure 10: presents a transport vehicle 300 of an interchangeable platform 200, as viewed from the side at the end of the unloading procedure.

### Detailed description of the invention

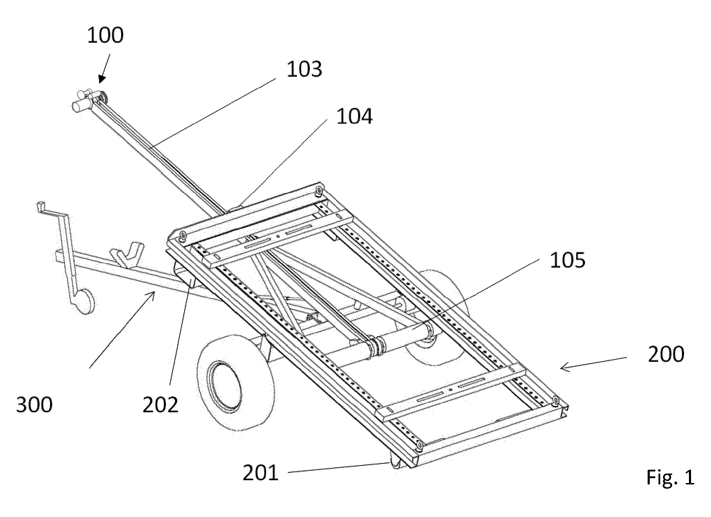

Figure 1 shows a transport vehicle 300 of an interchangeable platform 200. The transport vehicle 300 is a trailer with a tipping arm 103. The arm 103 is equipped with a loading device 100, i.e. a loading and unloading device 100 of an interchangeable platform 100. The rear part of the transport vehicle 300 has a transverse rear roller 105 and a loading device 100 in the front part of the arm 103. The transport vehicle 300 has a longitudinal arm 103 connecting the front and rear end and a tilting bearing (102, Figure 4). The arm 103 is arranged to support the interchangeable platform 200 while loading, unloading and transporting it, optionally by a carrier 104. The arm 103 is provided with a carrier 104, which moves along the arm.

Figure 1 also shows an interchangeable platform 200. Its front part has skids 202, a fastening point for the loading cable and rollers 201 in the rear part. The interchangeable platform is arranged partly on its transport vehicle 300.

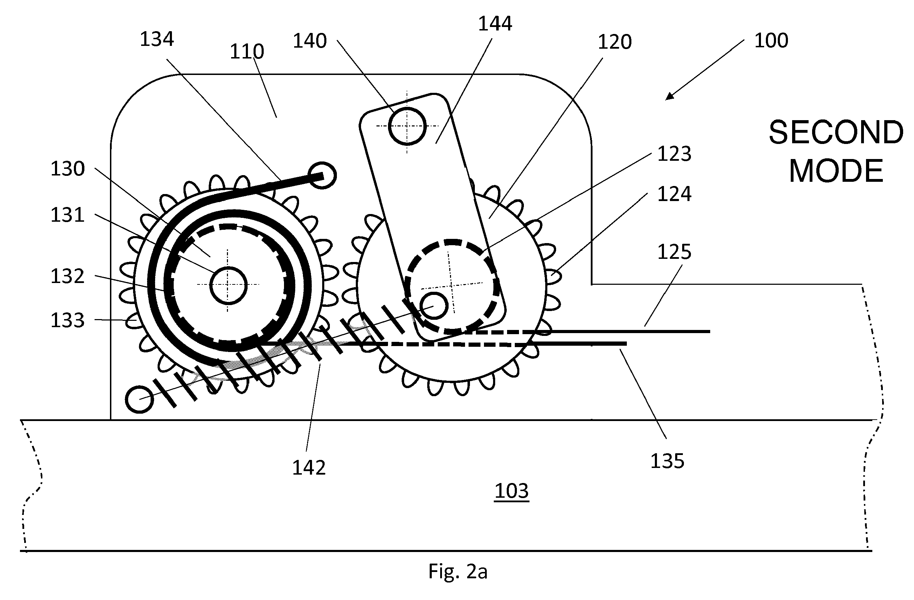

Figure 2a presents the loading and unloading device 100 in more detail from the side. The device 100 includes a load winch 120. The load winch 120 includes a loading reel 123 and tools for using the reel, such as a winch motor 121 (Figure 3a), a cranked handle 160 (Figure 3b) or a device, such as a hexagonal rod to receive driving power from a drilling machine, for example. With reference to Figures 3a, 3b and 3d, a mode of performance includes a reduction gear 122, such as a cogwheel 122, to transmit driving power to the loading reel 123. The driving power can be produced, for example, by means of a winch motor 122, manually with a cranked handle 160 or with an auxiliary motor, such as a drilling machine. By means of the driving power, the loading reel 123 can be used, as required, in whichever direction to perform loading or unloading. With regard to the descriptions of loading reel and unloading reel, a reel refers to a piece rotating around the axle. The reel includes two parts, such as a flange or head, which protrude from the axle radially. Consequently, a slot or groove remains between these parts so the cable (loading or unloading cable) can be rolled up so that the protruding parts in question guide the cable into the slot or groove, as shown in Figures 3a and 3b.

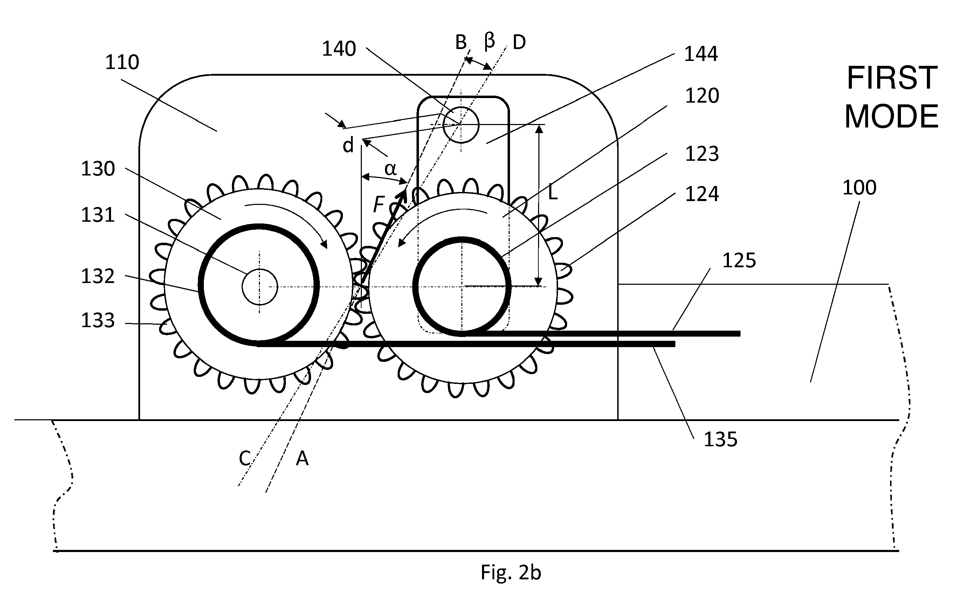

With reference to Figures 2a and 2b, the loading and unloading device 100 is arranged to be in the first and second mode. Figure 2b shows the device 100 in the first mode. In the first mode, the loading reel 123 is arranged to be used by driving power and loading reel 123 is arranged to transmit driving power to the unloading reel 132. Figure 2b shows the device 100 in the second mode. In the second mode, the loading reel 123 and unloading reel 132 have been arranged to be used in an independent manner. In other words, the loading reel 123 in the second mode is not in a power transmitting contact with the unloading reel 132. For example, such a distance remains between the loading reel and unloading reel, which the cogwheels operate, are not in power transmitting contact.

With reference to Figures 2a and 2b, the load winch 120 is arranged to slightly turn on a pivot bearing 140 in relation to the body 110 of the loading device 100. The rotating axle of the pivot bearing 140 is aside from the loading cable 125 line and the longitudinal direction of the rotating axle is perpendicular to the loading cable 125 line. Figures 2a-2c show that the rotating axle of the pivot bearing 140 is above the loading reel.

The unloading reel assembly 130 covers the gear wheel axle 131 driving the unloading reel 132 (i.e. the first axle 131) and the gear wheel 133 driving the unloading reel (i.e. the first gear wheel). In addition, the unloading reel assembly covers the unloading reel 132. The unloading reel may be arranged at the same axle 131 with the wheel 133, as shown in Figures 2a and 2b. Alternatively, different power transmitting components, such as gear wheels and/or chains, can be used between them.

The unloading reel 132 assembly 130 is connected to a fixed point in the loading device 100 body 110. For example, axle 131 is arranged to a fixed place relative to the body or to rotate in a fixed place relative to the body. The gear wheel axle 131 driving the unloading reel is perpendicular to the unloading cable 135 line. Arm 103 may function as the body of the loading and unloading device 100, for example, or the body 110 of the device 100 may have been connected to the arm 103. The unloading cable 135 and loading cable 125 lines, i.e. the longitudinal directions of these cables during operation, are essentially the same at least in some points. The angle remaining between the longitudinal directions may be less than 20 degrees, for example (see Figures 4-6). The travel of the cables 125 and 135 can be guided by means of different rollers or rolls (Figure 3d).

The unloading reel 132 is connected to the first gear wheel 133. The loading reel 123 is connected to the second gear wheel 124. In the mode according to Figure 2b, i.e. in the first mode of the device 100, the driving (second) gear wheel 124 and the driven (first) gear wheel 133 form a pair of gear wheels. In this mode, the pair of gear wheels 124 and 133 create the power transmission of the loading and unloading device 100, which drives the unloading reel 132 by means of the driving power transmitted to the unloading reel 123. The pair of gear wheels 124 and 133 also functions as the opening and closing switch of the unloading reel 132 power transmission according to Figures 2a and 2b.

With reference to Figure 2a, the loading cable 125 directs such power to the loading reel 123 during loading to try to turn the rod 144 to such a position that the device 100 will remain (and will shift to, if required) in the second mode. The rod 144 is arranged to turn on the pivot bearing 140. For example, the power transmission of the pair of gear wheels 124 and 133 has opened in Figure 2a, so the loading reel 123 and the unloading reel 124 have been arranged to be used in an independent manner. The movement to the second mode takes place as the power directed to the loading reel 123 is sufficiently high. This is possible with a loading cable 125, for example.

With reference to Figure 2a, the loading device 100 may include an actuator 142, such as a spring 142, which is arranged to direct power to the loading reel 123 and to turn the power transmission on due to the effect of this power, and to keep the power transmission on. With reference to Figures 2a and 2b, if the loading cable 125 is slack enough, the power directed by the spring 142 (Figure 2a) to the loading reel 123 pulls the rod 144 in such a position that the device 100 will remain (and will shift to, if required) in the first mode. The spring 142 force directed towards the unloading reel axle 131 is essentially directed to the load winch 120. The spring force aims to turn the unloading reel 132 power transmission on. This spring 142 may have been fastened e.g. by its one end to the rod 144 and by its other end to the loading device 100 body. It is clear that the loading device 100 can be kept in the first mode also by other actuators, such as compression springs, elastic pieces and/or magnets. The loading device 100 may have been arranged to shift to the first mode also by gravity when the loading cable 125 is not loaded. The movement by gravity may be sufficient especially if the connection between the gear wheels 133 and 124 is dimensioned as self-holding in a manner described later.

In addition, the coupling lever 152 of the power transmission release mechanism (Figure 2c) can be used to force the loading device 100 to shift to its second mode. The coupling lever 152 (Figure 2c) of the power transmission release mechanism can be used to force the load winch 120 and the related, driving gear wheel 124 to separate from the driven gear wheel 133 on the side of the unloading reel 132 slightly more than by the height of the gear wheel tooth to shift the power transmission of the unloading reel 132 to neutral. In Figure 2c, the unloading reel power transmission is in neutral. Correspondingly, the device 100 comprises tools 152 to secure the loading and unloading device 100 in the second mode.

The loading and unloading device 100 covers at least the tools to produce torque for the unloading reel 132 so that at least in the second mode, the loading and unloading device 100 is arranged to roll up the unloading cable 135 to the unloading reel 132 due to the effect of the given torque. The tools to produce torque can include, for example, a spiral spring 134 (Figure 2a). The spiral spring 134 may be connected to the unloading reel 132 and the loading device 100 body 110 to produce the given torque. Alternatively, the torque can be produced e.g. by a clutch, such as a viscous clutch. The driving power of the clutch could be taken from a separate motor, or the loading reel driving power, for example. By means of torque, the unloading cable 135 can be rolled in when the loading and unloading device 100 is in a second mode. This prevents the slackening of the unloading cable 134 in certain situations. Slackening would increase the risk of an accident and malfunctions. The spiral spring 134 included in the unloading reel 132 assembly 130 slightly contributes to the unloading reel 132 to continuously roll the unloading cable 135 up to the unloading reel 132.

The diameters of the unloading reel 132 and the loading reel 123 as well as the transmission ratio of the power transmission gear wheels 124 and 133 are dimensioned as a whole so that the unloading cable 135 speed is always at least the same or higher than the loading cable 125 speed when the power transmission is turned on. Depending on the situation, the speed of the unloading cable 135 corresponds to the speed of the outer periphery (i.e. track speed) of the reeling part of an empty unloading reel 132 or such an unloading reel with unloading cable 135 rolled up. Depending on the situation, the loading cable 125 speed is equivalent to the speed of the outer periphery (i.e. track speed) of the reeling part of an empty loading reel 123 or such a loading reel 123 with loading cable 125 rolled up. The cables can be rolled up in varying amounts, as required. Especially the length of the loading cable 125 can vary to a high extent depending on how the loading of a load located far off should take place. At the start of the loading procedure, the load must be within the range of the loading cable 125 (see Figure 4). The length of the loading cable 125 may be, for example 6-10 m, or even more, if required, such as 6-20 m. Typically, the unloading cable 135 can be considerably shorter, no more than 3-5 m. In a certain mode of performance, the unloading cable 135 is shorter than the loading cable 125.

The loading cable 125 advantageously contains polymer, such as polyethylene, polypropylene or their copolymer. More advantageously, the loading cable contains polyethylene with a high molecular weight. Most advantageously, the loading cable contains polyethylene with an extremely high molecular weight (ultra-high molecular weight polyethylene, UHMW-PE), such as Dyneema ® material. The details of the loading cable 125 material described here also apply to the unloading cable 135 material.

With reference to Figure 4, loading is performed with a loading and unloading device 100 so that the loading cable 125 reeled off the loading reel 123 is fastened to the front part of the interchangeable platform 200. The carrier 104 is in the rear position of the arm 103 at the start of the loading procedure. The carrier 104 may have been pulled to the rear position and/or it can be kept in the rear position by means of static force generated by the spiral spring 134 and by means of the unloading cable 135 (see Figures 4 and 5). Alternatively or additionally, the carrier 104 may have been pulled to the rear position and/or it can be kept in the rear position by means of the unloading reel 132 and further by means of the unloading cable 135. For example, the carrier 104 can be kept in the rear position by securing the unloading reel 132. For example, if the unloading reel 132 is used by means of the driving power of the device 100, the carrier 104 can be pulled to the rear position (as an alternative or addition to the force produced by the spiral spring 134).

At the start of the loading procedure, the unloading reel 132 power transmission is advantageously secured in the neutral position (second mode) by means of the power transmission release arm 152 (Figure 2c).
This enables using the loading reel 123 without reeling off more unloading cable from the unloading reel. In order to load the interchangeable platform 200, the use of the loading reel 123 must be allowed. In addition, when the interchangeable platform 200 is at a given distance from its transport vehicle 300, the loading cable 125 has to be rolled up at the start of the loading procedure without reeling off the unloading cable 135. If the unloading cable 135 was reeled off excessively from the unloading reel 132, it might cause a risk of an accident or damage. The transport vehicle 300 may be arranged so that the loading cable 125 attached to the loading device 100 can also be attached to the interchangeable platform 200, whose distance from its transport vehicle (300) is at least 1 m, preferably at least 2 to 3 m.

The loading takes place by rolling the loading cable 125 up to the loading reel 123, i.e. by using the loading reel 123 in the loading direction. With reference to Figures 3a-3d, the loading reel 123 can be used, for example, with a winch motor 121, cranked handle 160, or by means of a pin and a hand drill. Figure 5 illustrates the loading procedure. During loading, the loading reel 123 rolls the loading cable 125 up and the cable pulls the interchangeable platform 200 towards the arm 103. The interchangeable platform 200 pushes the carrier 104 towards the loading reel 123. The carrier 104 in turn pulls the unloading cable 135 through the sheave 106, reeling the unloading cable 135 off the unloading reel 132.

The interchangeable platform 200 can be prevented to move in the longitudinal direction on the transport vehicle 300 by securing the carrier 104 to the arm 103 e.g. with a tightening screw, eccentric tightener and/or a cotter bolt (not presented). In a certain mode of performance, the carrier 104 is attached to the interchangeable platform 200 as the front edge of the platform meets the carrier 104 when arriving at the arm 103. Additionally or alternatively, the interchangeable platform 200 can, if required, be secured to the carrier 104 and/or the loading reel 123 can be secured and/or the interchangeable platform can be secured to the arm 103 for the transportation.

With reference to Figures 6-10, the loading and unloading device 100 can also be used to unload the interchangeable platform 200 from its transport vehicle 300. As the interchangeable platform 200 is unloaded from its transport vehicle 300, the loading reel 123 is rotated in the unloading direction (Figure 6). The arrows of the loading and unloading reels in Figure 6 present the use of the reels in the unloading direction. In this case, the unloading reel 123 reels the unloading cable 126 off. If the device 100 is in the first mode (Figures 2b and 6), the loading reel 123 also rotates the unloading reel 132.

The cables 135 and 125 of the unloading reel and loading reel (correspondingly) are rolled up so that while the device 100 is in the first mode (i.e. the power transmission 124, 133 is turned on) and the first reel (123, 132) is rolling the cable (125, 135) up, the second reel (132, 123, correspondingly) will reel off the other cable (135, 125, correspondingly).

Thus, while unloading, the device 100 is (or at least can be) in the first mode, so the loading reel 123 will release the loading cable 125 and the unloading reel 132 will roll up (or at least can roll up) the unloading cable 135. With reference to Figure 6, as the unloading cable 135 goes around the sheave 106 and while the unloading cable is rolled up to the unloading reel 132, the unloading cable 135 pulls the carrier 104 backwards on the arm 103. At the same time, the carrier 104 pushes the platform 200 backwards.

As the unloading proceeds due to the effect of gravity or force induced in the loading device 100, the arm will tip together with the interchangeable platform 200 and the rear rollers 201 of the platform 200 will hit the ground (Figure 7).

While unloading, the speed of the unloading cable 135 is higher than that of the loading cable 125, which increases the tension of the cables 125 and 135 (Figure 8). The tension of the loading cable 125 directs force to the loading reel 123. As the extent of this force is such that it overrides or exceeds the effect of the force caused by the spring 142 (and/or another actuator 142 and/or gravity), the force induced by the loading cable 125, which is directed to the loading reel 123, pulls the loading device into its second mode, i.e. turns the power transmission off. In the case presented in the figures, the force directed to the loading reel 123 will move the loading reel as this force overrides the effect of the spring 124. In other words, the tightening loading cable 125 starts to turn the rod 144 (Figure 2a) around the pivot bearing 140 away from the unloading reel assembly 130. As the tooth contact is released, the power transmission of the unloading reel 132 is set in neutral (Figure 8). Now the unloading reel 132 releases the unloading cable 135 until its tension is equivalent to the spring force caused by the spiral spring 134 (Figure 2a). The synchronization of the cable lengths, which takes place after releasing the unloading cable, set the cables to a suitable length. In addition, it is also clear that in some other modes of performance, the force that causes the unloading reel power transmission to be released, can be directed in another direction compared to the distance set between the reels 123 and 132.

While the loading reel 123 is further used in the unloading direction, the loading reel 123 will release more loading cable 125 (Figure 8). As a result, the loading cable 125 slackens. After the loading cable 125 has been reeled off sufficiently, no external force is directed to the loading reel 123. Now the spring 124 is arranged to pull the load winch 120 fastened to the pivot bearing 140 towards the unloading reel 132 by means of its traction force and the rod 144. After the unloading cable 125 has been reeled off sufficiently, the device 100 will settle in its first mode, so the power transmission between the loading reel 123 and the unloading reel 132 will return. After this, the unloading of the interchangeable platform 200 will continue as described earlier. This procedure synchronizes the lengths of the unreeled parts of the unloading cable 135 and the loading cable 125 relative to the length determined by the reels 123 and 132, sheave 106 and carrier 104.

A suitable length is determined so that the cables 125 and 135 are sufficiently tight (e.g. 10 N-1 kN) as the unloading cable 135 proceeds from the unloading reel 132 to its fastening point at the carrier 104 through the sheave 106 and the loading cable 125 proceeds from the loading reel 123 to its fastening point at the interchangeable platform 200, advantageously through the carrier 104 or through the part of the carrier 104. An example of the structure of the transport vehicle 300 and the carrier 104 is presented, for example, in the application publication WO 2013/178883 corresponding to the patent above. This need to synchronize the cable lengths may recur from time to time as the unloading proceeds.

The power with which the loading device 100 is arranged to shift to the second mode can be, for example, 10 N-1kN, such as 10 N-400 N. In a certain mode of performance, the loading device 100 is arranged to shift to the second mode when the loading cable tension is more than 10 N, 50 N 100 N or 300 N, for example.

In certain situations, unloading can be performed downhill or onto a low-friction base (Figure 9). In this case, after the loading device 100 has tipped the load, the interchangeable platform 200 can try to exit the loading device 100 by itself due to the effect of earth gravity. However, the loading cable 125 holds the interchangeable platform 200 back and determines the speed at which the platform 200 is unloaded from the transport vehicle 300. Since the interchangeable platform 200 directs the force to the loading cable 125, the loading and unloading device 100 shifts to the second mode (Figure 2a). Now the power transmission of the unloading reel 132 is in neutral. As the power transmission of the unloading reel 132 is in neutral, the power transmission does not rotate the unloading reel 132. However, it is advantageous to direct such torque to the unloading reel 132, which rolls the unloading cable 135 in so that the unloading cable 135 would not become slack as the carrier 104 moves backwards on the arm 103 to shorten the distance between the carrier 104 and the unloading reel 132. In this case, the spiral spring 134 connected to the unloading reel 132 (Figure 2a) reels the unloading cable 135 up to the unloading reel 132 while the carrier 104 moves backwards due to gravity and as the loading cable 125 is reeled off the loading reel 123. This way, the spiral spring 134 prevents the unloading cable 135 from slackening in such a situation.

Figure 2b presents a diagram of a loading and unloading device 100 in the first mode as viewed from the side, i.e. with the power transmission of the unloading reel 132 connected. The rear end of the arm 103 is on the right in the coordinate system of the figure (not presented). With reference to Figure 2b, as the unloading reel 132 is used by means of the loading reel 123, the first gearwheel 133 connected to the unloading reel directs force F to another gear wheel 124 connected to the loading reel 123.

Figure 2b shows that while loading, the driving gear wheel 124 (i.e. the second gear wheel) rotates counterclockwise in the coordinate system of the figure and thus drives the gear wheel 133 (i.e. the first gear wheel) clockwise. As a result of the tooth contact, the teeth of the driving gear wheel 124 in contact are subjected to mesh force created by the unloading cable 135 tension, which is marked with an arrow and letter F in the diagram. Force F is in the direction of the line of action AB of the tooth pair 124, 133. The line of action AB is tangential to the base circles of both gear wheels and it is presented in the diagram 2b. The pressure angle α is provided by the angle difference of this graph AB relative to the normal of the line connecting the hubs of the gear wheels and it is marked with letter α in the figure. A typical pressure angle is e.g. 20 degrees. Figure 2b shows that the traction direction of the loading cable 125 is to the right as it is released from the loading reel 123. In order to apply the tensile force of the loading cable 125 to set the power transmission in neutral, the pivot bearing 140 axle must be aside from the loading cable 125 line. The angle between the longitudinal direction of the rod 144 and the loading cable 135 is advantageously between 45 and 135 degrees, such as approximately 90 degrees. The longitudinal direction of the rod 144 means the direction of the shortest distance between the pivot bearing 140 centre axis and the rotating axle of another loading reel 123.

In the coordinate system of Figure 2b, the pivot bearing 140 is above the loading cable line and loading reel. In order to ensure that the connection of gear wheels 124, 133 is self-holding while loaded, the mesh force F directs the torque to the rod 144. This torque tries to turn the rod 144 so that second gear wheel 124 tries to move towards the first gear wheel 133.

As presented above, the tension of the unloading cable 125 tries to turn the rod 144 so that the second gear wheel 124 tries to move away from the first gear wheel 133. In a certain mode of performance, the torque directed to the rod 144 by the mesh force F is in the opposite direction to that directed to the rod 144 by the loading cable 135. Both torque lever arm values are measured from the centre axis of the pivot bearing 140 axle. The lever arm of mesh force F is thus the directed distance from the centre axis of the pivot bearing 140 axle to the application point of mesh force F, i.e. to the contact point of the teeth of the gear wheels 124, 133. The lever arm of the force induced by the loading cable 125 is thus the directed distance from the centre axis of the pivot bearing 140 axle to the application point of the force, i.e. to the centre axis of the rotating axle of the loading reel 123.

As an option, other gear wheels and/or chains and/or belts can be used to transmit the driving power from the first gear wheel 133 to the unloading reel. As an option, other gear wheels and/or chains and/or belts can be used to transmit the driving power from the second gear wheel 124 to the loading reel.

In Figure 2b, the centre axis of the pivot bearing 140 is located on the right side of the line of action AB and clockwise relative to the contact point of the gear wheels 124, 133 (i.e. to the application point of the mesh force) as the driving gear wheel 124 rotates counterclockwise to produce power transmission for the unloading reel 132 during unloading. In this case, the torque of mesh force F, which is specified as the cross product of the lever arm (which is the distance between the mesh force application point and the center axis of the pivot bearing 140 axle) and mesh force F, is perpendicular against the image plane and directed away from the viewer. Correspondingly, the torque directed to the rod 144 by the loading cable 125 is perpendicular against the image plane and directed towards the viewer. In this case, these torques are in opposite directions to create a self-holding effect.

In general, the line of action is examined in a plane, whose normal is in the direction of the rotating axle of the gear wheels 133, 124. Because the line of action AB is tangential to the base circles of the gear wheels 124, 133 and as the first gear wheel 133 and the second gear wheel 124 are in a power transmitting contact, the first plane is formed that is tangential to the base circle of both gear wheels 124, 133. One of the directions of the first plane is in the direction of the second gear wheel 124 rotating axle. In addition, the second plane is tangential to the base circle of both gear wheels 124, 133 and one of the directions of the second plane is in the direction of the rotating axle of the second gear wheel 124.

This given torque condition is realised, for example, when the pivot bearing is arranged in such a place that the centre axis of the second gear wheel rotating axle and both centre axes of the pivot bearing are on the same side of the first plane and the centre axis of the second gear wheel rotating axle and the centre axes of the pivot bearing are on the same side of the second plane.

If the pivot bearing 140 is located clearly aside from the line of action AB, the tooth contact under a high pressure in gear wheels 124, 133 makes it difficult to switch the power transmission off. An advantageous place for the pivot bearing 140 is on a line segment, which connects the contact point of the teeth and the hub of the pivot bearing 140. It shows as a straight line CD in diagram 2b. The angle between the straight lines AB and CD β is advantageously e.g. 1-25 degrees, most advantageously approximately 5 degrees. Additionally, the angle β opens so that the straight line CD forms an angle with the normal of the line connecting the hubs of the gear wheels 133 and 124, which is larger than pressure angle α.

An advantageous position for the pivot bearing 140 is such that the centre axis of the pivot bearing 140 pivoted axle is located at a distance d from the plane specified by the line of action AB and the straight line in the direction of the pivot bearing 140 pivoted axle. In addition, the centre axis of the pivot bearing 140 pivoted axle is located on the same side of the plane in question as the centre axis of the loading reel 123. The distance d can advantageously be e.g. at least 5 mm or at least 10 mm, as an option no more than 100 mm. Proportioned to the distance L between the centre axis of the pivot bearing 140 pivoted axle and the loading reel 123 centre axis, the ratio d/L can be e.g. at least 1/20, such as at least 1/10. As an option, the ratio cannot be more than ½ or 1/3, for example. Such a dimension also contributes to a suitable self-holding property. In these modes of performance, the distance L can be at least 50 mm, 60 mm or at least 75 mm. As an option, it cannot be more than 400 mm, such as no more than 200 mm.

Figure 3c shows a motor-driven loading device 100. The mode of performance in Figure 3c corresponds to that of Figure 3a as viewed from the side.

Figure 3d presents the performance mode of a manually operated loading device 100 as viewed from the side. The loading reel 123 is arranged to be used via the reduction gear 122, using the cranked handle 160. The loading cable 125 travels to the interchangeable platform through the axle or sheave 141 as described above. This way, the tightening of the loading cable 125 causes a downward force in the loading reel 123, which opens the power transmission between the loading and unloading reels, as required. In this mode of performance, the same axle functions as the pivoted axle of the pivot bearing 140 and the driving axle of the crank 160. This comes with an advantage that the driving axle of the crank 160 remains in position also when the rod 144 turns in relation to the body 110 of the loading device 100. This adds to the comfortability of use as the driving axle of the crank 160 remains in position also during the synchronization of the cable lengths. It is clear that in different modes of performance the cables 125, 135 can be guided with different axles or sheaves 141 in a suitable manner. It is also clear that power can be transmitted, for example, from the crank 160 or the motor 121 to the loading reel by means of different cogwheels, chains and/or belts.

As presented above, the use of the unloading reel 132 must be stopped during unloading whenever the carrier 104 reaches its extreme position in the rear part of the arm 103. After this, the loading cable can be pulled either by securing the loading and unloading device to its other mode (Figure 2c) or by pulling by loading cable 125 with such force that the loading and unloading device 100 shifts to another mode (where the power transmission is turned off). In a manually operated device, this situation is easy to see and the unloading can be stopped when the carrier 104 is in its extreme position. With regard to electric winches, the motor 121 is advantageously guided so that unloading is prevented in this case, i.e. the use of the motor 121 is prevented, if the power transmission has not been forced to be turned off.

Otherwise the unloading can only be performed when the loading and unloading device has not been secured in its second mode. In other words, the loading and unloading device is or at least can be in its first mode (with the power transmission turned on). As presented above, unloading can be performed downhill, even if the power transmission had been forced to be disconnected.

Correspondingly, the operation of the motor 121 can be prevented during loading when the carrier 104 has reached its extreme position in the front part 103 of the arm 103. During loading, the transmission of the driving power can be secured in the second mode (free mode), or it can shift to that mode by means of the loading cable 125 as described above.

The winch motor 121 can be allowed to load, if the following conditions are met:
- the unloading reel power transmission is in neutral or it is able to shift to neutral and
- the carrier 104 is not in the front position of the arm 103.

These conditions can be met with the first sensor 184 and the second sensor 185. The first sensor 184 (Figure 2c) identifies the securing of the power transmission connection, i.e. if the power transmission is secured in the neutral mode or not. The second sensor 185 identifies the position of the carrier 104 on the arm 103. The second sensor 185 can identify, for example, if the carrier 104 is in the front position or not.

As the loading starts, the loading cable 125 pulls and elevates the front part of the interchangeable platform 200 over the rear roller 105 and onto the loading device 100 (Figure 5). The front part of the interchangeable platform 200 pushes the carrier 104 on the arm 103. The unloading cable 135 fastened to the carrier 104 is reeled off the unloading reel 132 as it overcomes the counter force caused by the spiral spring 134. At the end of the loading, the loading device 100 tips to the horizontal position due to the effect of gravity or force directed to it (Figure 6).

The winch motor 121 can be allowed to rotate in the unloading direction, if the power transmission of the unloading reel 132 has not been secured in the neutral mode (in the second mode of the loading and unloading device). At the start of the unloading, the carrier 104 is not in the rear position of the arm and the interchangeable platform can be unloaded as described above by means of the unloading cable. The securing can be identified with the first sensor 184 referred to earlier.

As the unloading proceeds, the carrier 104 reaches the rear position on the arm 103 (Figure 10). The unloading is interrupted by the third sensor 187, which identifies the position of the carrier 104 in the rear position of the arm 103. As the front part of the interchangeable platform 200 has passed the rear roller 105 of the loading device pushed by the carrier 104, the interchangeable platform 200 is at least partly supported by the loading cable 125. The loading cable 125 has a tension so the power transmission of the unloading reel 132 is naturally in neutral. In case of problems (e.g. obstacles preventing the natural movement of the platform), it can be ensured with the first sensor 184 that the power transmission is forced to be turned off. Due to this, the unloading can be allowed to continue without interruptions, at least after the power transmission has been turned off.

In this case, the power transmission release arm 152 (Figure 2c) is used to force the unloading reel 132 power transmission to shift to neutral, i.e. the device 100 shifts to its second mode. Now the front part of the interchangeable platform 200 is lowered to the ground by gravity at a speed determined by the loading cable 125, while the winch motor reduction gear 122 functions as a brake. The unloading can be continued, for example, to take the loading cable to the interchangeable platform located further off.

The power transmission of the unloading reel 132 cannot be on in this situation as the carrier 104 connected to the unloading cable 135 cannot move any further than the rear position of the arm 103.

After this, the loading cable 125 can be reeled further off, which enables the removal of the loading cable 125 from the interchangeable platform 200.

In terms of the user logic, the device could include several sensors:
- The first sensor 184, which is arranged to identify the securing of the power transmission transfer, i.e. if the loading device 100 is secured in the second mode (Figure 2c) or not. The data given by the first sensor can be used to control the motor 121 as described above.
- The second sensor 185 is connected to the route of the carrier 104 in the front part of the transport vehicle 300, which indicates, if the carrier 104 is in the front position of the arm 103 or not. This data provided by the sensor can be used to control the motor 121, as described above, together with the signal from the first sensor 184.
- The third sensor 187 is connected to the route of the carrier 104 in the front part of the transport vehicle 300, which indicates, if the carrier 104 is in the rear position of the arm 103 or not. This data provided by the sensor can be used to control the motor 121, as described above, together with the signal from the first sensor 184.

The combination of the second and third sensor (185 and 187) can be regarded as a sensor or a sensor arrangement, which is arranged to provide data on the position of the carrier 104 on the arm 103. This combination is arranged to measure the position of the carrier at least at such an accuracy that shows if the carrier 104 is in the front or rear position. The carrier 104 can also be between these positions. Such a position measurement can also be performed with a different kind of sensor.

According to one example, the dimensioning of the loading and unloading device 100 can be the following, for example:
- The output of the electric motor 121 is 800 W.
- The transmission ratio of the reduction gear 122 is 1:180.
- The diameter of the loading reel 123 is 50 mm.
- The outer diameter of the driving gear wheel 124 is 110 mm.
- The number of teeth in the gear wheel 124 is 30.
- The diameter of the loading cable 125 is 5 mm.
- The material of the loading cable 125 is polyethylene of an extremely high molecular weight (ultra-high molecular weight polyethylene, UHMW-PE), such as Dyneema ® material.
- The diameter of the unloading cable 121 is 65 mm.
- The outer diameter of the driven gear wheel 133 is 110 mm.
- The number of teeth in the driven gear wheel 133 is 30.
- The diameter of the unloading cable 135 is 5 mm.
- The material of the unloading cable 135 is polyethylene of an extremely high molecular weight (ultra-high molecular weight polyethylene, UHMW-PE), such as Dyneema ® material.
- The distance L between the pivot bearing centre axis (Figure 2b) and the centre of rotation of the loading reel 123 is e.g. 90 mm.
- The distance d between the pivot bearing 140 centre axis and the line of action AB is e.g. 10 mm.

In this and in other modes of performance, the ratio d/L is advantageously between 1/20-1/3, such as between 1/10-1/4.

With reference to Figure 3b, one performance mode of the invention includes the loading reel 123, which can be rolled up mechanically in two directions. In the performance mode of Figure 3b, the loading reel is used with a cranked handle 160. Alternatively, instead of or in addition to the cranked handle 160, a winch motor 121, which is either fixed or can be connected and uses auxiliary energy, such as an electric drill, can drive the loading reel 123. In this case, the cranked handle 160 can be replaced e.g. with a hexagonal or other suitable pin, which is used with a corresponding wrench connected to a drill. The cranked handle 160 can be fastened to such a pin. Alternatively, the loading device 100 can include a pin in addition to a cranked handle to connect the drill. Instead of a pin, a suitably shaped notch can be used for a corresponding wrench, such as a hexagon wrench or a screw point (straight, crosshead torx®, or equivalent). The winch motor 121 using auxiliary energy can be connected either directly or through a fixed or removable reduction gear to the loading reel 123 of the loading device 100.

## Claims

1. A loading and unloading device (100) that is suitable for loading and unloading the interchangeable platform (200) from its transport vehicle (300) and which the loading and unloading device (100) encompasses
- an unloading reel (132) with unloading cable (135) rolled up or to be rolled up
- a loading reel (123) with loading cable (125) rolled up or to be rolled up and
- means (160, 121, 124) for driving the loading reel (123)
**characterized in that**
- the loading and unloading device (100) is arranged to be in a first and a second mode, wherein
• in the first mode
o the loading reel (123) is arranged to be used by means of driving power and
o the loading reel (123) is arranged to transmit the driving power to the unloading reel (132) so that
o the power transmission between the loading reel (123) and unloading reel (132) is turned on and the unloading reel (132) is arranged to be used by means of the driving power, and
• in the second mode
o the power transmission between the loading reel (123) and unloading reel (132) is turned off and the loading reel (123) and the unloading reel (132) have been arranged to be used in a manner independent from each other;
which the loading and unloading device (100) also encompasses
- means (134) for applying torque to the unloading reel (132) so that in at least the second mode the means (134) have been arranged to drive the unloading reel (132) to roll the unloading cable (135) up to the unloading reel (132) due to the effect of the given torque, wherein
- the loading and unloading device (100) is arranged
• to shift to the first mode due to the effect of a first force and to remain in the first mode, and
• to shift from the first mode to the second mode once a second force is applied to the loading reel (123) such that the effect of the second force overrules or exceeds the effect of the first force.

2. The loading and unloading device (100) according to claim 1 is **characterized in that** at least one of the following
- the loading reel (123),
- the unloading reel (132) and
- the driving power transmission between the loading reel and unloading reel (124, 133) is dimensioned so that while the loading and unloading device (100) is in the first mode, the track speed of the reeling part of the unloading reel (132) in the first mode is at least as high as that of the reeling part of the loading reel (123).

3. The loading and unloading device (100) accroding to claim 1 or 2 is **characterized in that** the loading and unloading device (100) encompasses
- means (152) to secure the loading and unloading device (100) in the second mode and/or
- an actuator (142), which is arranged
• to create the first force and
• to shift the loading and unloading device (100) to the first mode with the first force and to keep the device (100) in the first mode.

4. The loading and unloading device (100) accroding to any of the claims 1-3 **characterized in that** the loading and unloading device (100) also encompasses
- a loading cable (125), which has been or can be rolled to the loading reel (123), and
- an unloading cable (135), which has been or can be rolled to the unloading reel 30 (132) and
- during loading, the loading cable (125) has been arranged to be rolled up to the loading reel (123) so that the loading cable tension (125) is arranged
• to keep the loading and unloading device (100) in the given second mode and/or
• to shift the loading and unloading device (100) to the given second mode
- the loading cable (125) and the unloading cable (135) have been arranged so that while the loading cable (125) is rolled up to the loading reel (125) during the loading in the second mode, the unloading cable (135) is reeled off the unloading reel (132).

5. The loading and unloading device accroding to patent claim 4 is **characterized in that** at least one of the following
- loading reel (123),
- unloading reel (132) and
- the driving power transmission between the loading reel and unloading reel (124, 133) is dimensioned so that the track speed of the reeling part of the unloading reel (132) is at least the same as that of the reeling part of the loading reel (123) at least during the operation of the device so that the unloading cable (135) is rolled up to the unloading reel (132) and/or the loading cable (125) is rolled up to the loading reel (123).

6. The loading and unloading device (100) accroding to claim 4 or 5 is **characterized in that**
- the loading and unloading device (100) is arranged in its first mode so that when the loading cable (125) is reeled off the loading reel (123) by means of the driving power of the loading reel (123), the given driving power is transmitted to the unloading reel (132) so that the unloading reel (132) rolls the unloading cable (135) in;
advantageously additionally
- the loading and unloading device (100) is arranged in its first mode so that when the unloading reel (132) rolls the unloading cable (135) in, the loading cable (125) tension increases and when the loading cable (125) tension overrides or exceeds the effect of the first force, the loading and unloading device (100) is arranged to shift from the first mode to the second mode.

7. The loading and unloading device (100) according to any of the claims 1-6 is **characterized in that** it encompasses
- a body (110),
- the first axle, which is fixed relative to the body (110) or has been arranged to rotate in a fixed position,
- the first gear wheel (133) to receive driving power where the rotating axle of the first gear wheel (133) is the given first axle,
- means, such as the given first axle, to transmit driving power from the first gear wheel (133) to the unloading reel (132),
- a pivot bearing (140), which is either fixed relative to the body (110) or arranged to pivot in a fixed position,
- a rod (144) connected to the pivot bearing (140), which is fastened to the body (110) with the pivot bearing (140) and arranged to turn relative to the body (110) and
- the second axle, which is parallel to the first axle and fixed relative to the rod (144) or has been arranged to rotate in a fixed position relative to the rod (144) and
- the second gearwheel (124) arranged on the second axle, which is arranged
• to receive the driving power of the loading reel (123),
• to transmit the given driving power to the loading reel (123) through the second axle and
• to transmit the given driving power to the first gear wheel (133) in which case
- the loading and unloading device (100) is arranged to shift from the first mode to the second mode and from the second mode to the first mode as the rod (144) turns relative to the body (110) supported by the pivot bearing (140) so that
• the first gear wheel (133) in the first mode and the second gear wheel (124) are in a power transmitting contact and
• a distance remains between the teeth of the first gear wheel (133) in the second mode and those of the second gearwheel (124);
as an option,
- the given first axle forms the rotating axle of the unloading reel (132) or the unloading reel (132) has been arranged on another axle to be in a power transmitting contact with the first gear wheel (133) and/or
- the given second axle forms the rotating axle of the loading reel (123) or the loading reel (123) has been arranged on another axle to be in a power transmitting contact with the second gearwheel (124).

8. The loading and unloading device (100) according to claim 7 **characterized in that** the device (100) has been arranged so that
- when the loading reel (123) is used in the unloading direction with the loading and unloading device (100) in the first mode, the given first gear wheel (133) applies mesh force (F) to the given second gear wheel (124) and
- the position of the centre axis of the given pivot bearing (140) is dimensioned so that the mesh force (F) applies such a torque to the rod (144) that the given torque tries to turn the rod (144) in such a direction, where the second gearwheel (124) tries to move towards the first gear wheel (133);
for example, the position of the centre axis of the given pivot bearing (140) is dimensioned so that
• the given mesh force (F) applies the first torque to the given rod (144), whose lever arm is the line segment between the centre axis (144) of the pivot bearing (140) and the mesh force (F) application point,
• the loading cable (125) applies the second torque to the given rod (144), whose lever arm is the line segment between the centre axis of the pivot bearing (140) and the rotating axle of the loading reel (123), and
• the first and second torque are in opposite directions.

9. The loading and unloading device (100) accroding to claim 8 **characterized in that**
- the rotating axle of the given loading reel (123) is arranged at the first distance (L) from the centre axis of the pivot bearing (140), and
- the centre axis of the given pivot bearing (140) is arranged at the second distance (d) from such a plane created by the mesh graph of the given mesh force (F) and the centre axis of the given second axle, and
- the first distance (L) is at least three times as long compared to the second distance (d) (L ≥ 3d).

10. The transport vehicle (300) of the interchangeable platform encompasses
- the body of the transport vehicle (300),
- at least two wheels connected to the body of the transport vehicle (300) to drive the vehicle,
- an arm (103) arranged to support the interchangeable platform (200) while loading, unloading and transporting,
- a carrier (104), which is arranged on the arm (103) and/or for the arm (103), or arranged to move along the arm (103),
- a tilting bearing (102), which is suitable for lifting and lowering the front end of the arm (103), which bearing (102) is connected to the rear end of the arm (103), and
- a sheave (106), which is arranged further away from the front end of the arm (103) compared to the opposite rear end of the arm (103),
**characterized in that** the transport vehicle of the interchangeable platform (300) encompasses
- a loading and unloading device (100) accroding to any of claims 1-9, which is attached to the front end of the given arm (103), where
- the unloading cable (135) is arranged to encircle the sheave (106) and
- the unloading cable (135) is arranged to be connected to the carrier (104) and
- the loading cable (125) is arranged to be simultaneously attached to the loading and unloading device (100) and the interchangeable platform (200), advantageously also to such an interchangeable platform, whose distance from the transport vehicle of the interchangeable platform (300) is at least 1 m.
